# EUROPÄISCHE PATENTANMELDUNG

(11) **EP 1 309 133 A1**
(43) Veröffentlichungstag der Anmeldung: **07.05.2003**
(21) Anmeldenummer: 01126009.8
(22) Anmeldetag: 31.10.2001
(51) Int. Cl.: H04L 12/56, H04L 12/26

(54) **Verfahren, Empfangseinrichtung und Sendeeinrichtung zur Bestimmung des schnellsten Nachrichtenpfades ohne Uhrensynchronisation**

(71) Anmelder: SIEMENS AKTIENGESELLSCHAFT, 80333 München (DE)
(72) Erfinder: Schwarzbauer, Hanns Juergen, Dr., 82194 Groebenzell (DE); Tuexen, Michael, Dr., 81479 München (DE)

(57) **Zusammenfassung**

Gesicherte Transportprotokolle messen normalerweise die Roundtrip-Verzögerung, um daraus abzuleiten, wann Nachrichten wiederholt werden müssen. Typische Beispiele derartiger gesicherter Transportprotokolle sind Transmission Control Protocol TCP gemäß IETF RFC 793 und Stream Control Transmission Protocol SCTP gemäß IETF RFC 2960. Ein Rückschluß auf die Einwegverzögerung aus der bestimmten Roundtrip-Verzögerung ist im Allgemeinen nicht möglich. Existieren für einen Sender (S) mehrere Nachrichtenpfade (P1, P2, P3), um die Nachrichten an einen Empfänger (E) zu senden, so kann es günstig sein, die Nachrichten auf dem Nachrichtenpfad (P1) zu senden, auf dem sie am schnellsten zum Empfänger übermittelt werden. Dazu müssen beim Sender (S) Informationen vorliegen, welcher Nachrichtenpfad (P1, P2, P3) der schnellste ist. Erfindungsgemäß ist dafür eine Uhrensynchronität von Sender (S) und Empfänger (E) nicht erforderlich. Dem zugrunde liegt die Idee, daß für das Ermitteln des schnellsten Nachrichtenpfades (P1) nicht die absoluten Verzögerungszeiten auf den verschiedenen Nachrichtenpfaden (P1, P2, P3) bekannt sein müssen, sondern daß es vielmehr ausreicht, je eine Nachricht (DelayRes) auf mehreren zu untersuchenden Nachrichtenpfaden (P1, P2, P3) abzusenden und anhand der Empfangsreihenfolge den schnellsten Nachrichtenpfad (P1) zu erkennen.

## Beschreibung

Gesicherte Transportprotokolle messen normalerweise die Roundtrip-Verzögerung, d.h. die Gesamtverzögerung, die bei der Übertragung einer Nachricht von einem Sender zu einem Empfänger und der Übertragung einer weiteren Nachricht, z.B. einer Bestätigungsnachricht, vom Empfänger zum Sender auftritt, um daraus abzuleiten, wann Nachrichten wiederholt werden müssen. Typische Beispiele derartiger gesicherter Transportprotokolle sind Transmission Control Protocol TCP gemäß IETF RFC 793 und Stream Control Transmission Protocol SCTP gemäß IETF RFC 2960.

Zur Messung dieser Roundtrip-Verzögerung wird im Sender die Sendezeit einer Nachricht vermerkt und die Empfangszeit einer vom Empfänger der gesendeten Nachricht eintreffenden Bestätigungsnachricht festgestellt. Aus der Differenz dieser Zeiten wird die Roundtrip-Verzögerung bestimmt. Für dieses Verfahren ist keine Uhrensynchronisation erforderlich.

Da jedoch die Übertragung der Nachrichten vom Sender zum Empfänger auf anderen Nachrichtenpfaden erfolgen kann als die Übertragung der Bestätigungsnachrichten vom Empfänger zum Sender, läßt der ermittelte Wert der Roundtrip-Verzögerung keine Rückschlüsse auf die Einweg-Verzögerungen vom Sender zum Empfänger und umgekehrt zu. Auch wenn die Übertragung der Nachrichten vom Sender zum Empfänger auf dem gleichen Nachrichtenpfad erfolgt wie die Übertragung der Bestätigungsnachrichten vom Empfänger zum Sender, läßt der ermittelte Wert der Roundtrip-Verzögerung keine Rückschlüsse auf die Einweg-Verzögerungen vom Sender zum Empfänger und umgekehrt zu, da der Nachrichtenpfad stark unsymmetrisch sein kann.

Existieren für einen Sender mehrere Nachrichtenpfade, um die Nachrichten an einen Empfänger zu senden, so kann es günstig sein, die Nachrichten auf dem Nachrichtenpfad zu senden, auf dem sie am schnellsten zum Empfänger übermittelt werden. Dazu müssen beim Sender Informationen vorliegen, welcher Nachrichtenpfad der schnellste ist. Die Bestimmung des schnellsten Nachrichtenpfades kann anhand der Einweg-Verzögerungen aller Nachrichtenpfade vom Sender zum Empfänger vorgenommen werden.

Bekannte Lösungen zur Messung der Einweg-Verzögerungen setzen Uhrensynchronität der Uhren bzw. Taktgeneratoren von Sender und Empfänger voraus. Uhrensynchronität bedeutet dabei, daß die Uhren bzw. Taktgeneratoren gleich schnell laufen, aber nicht notwendigerweise auch gleiche absolute Zeiten aufweisen. Liegt Uhrensynchronität vor, wird eine beliebige oder eine eigens für Meßzwecke vorgesehene, durch den Sender mit einem Zeitstempel versehene Nachricht vom Sender an den Empfänger gesendet. Aus der Differenz zwischen Empfangszeitpunkt und Zeitstempel kann die Einweg-Verzögerung für den betreffenden Nachrichtenpfad durch den Empfänger ermittelt werden. Um aus einer Anzahl vorhandener Nachrichtenpfade den schnellsten zu ermitteln, muß das Verfahren in geeigneter Weise für alle Nachrichtenpfade wiederholt werden. Durch Vergleich der für alle Nachrichtenpfade vom Empfänger ermittelten Einweg-Verzögerungen ist es im Empfänger leicht möglich, den schnellsten Nachrichtenpfad zu identifizieren und diesen an den Sender zu signalisieren.

Uhrensynchronität zwischen Sender und Empfänger existiert jedoch in vielen Fällen nicht.

Die der vorliegenden Erfindung zugrundeliegende Aufgabe besteht darin, die bekannten Verfahren, Empfangseinrichtungen und Sendeeinrichtungen zur Bestimmung des schnellsten Nachrichtenpfades zu verbessern.

Diese Aufgabe wird durch die Merkmale der Patenansprüche 1, 9 sowie 15 gelöst.

Bevorzugte Ausführungsformen sind Gegenstand der abhängigen Ansprüche.

Ein wesentlicher Vorteil des erfindungsgemäßen Verfahrens besteht darin, daß Uhrensynchronität von Sender und Empfänger nicht erforderlich ist, um den schnellsten Nachrichtenpfad zwischen Sender und Empfänger zu ermitteln. Dem zugrunde liegt die Idee, daß für das Ermitteln des schnellsten Nachrichtenpfades nicht die absoluten Verzögerungszeiten auf den verschiedenen Nachrichtenpfaden bekannt sein müssen, sondern daß es vielmehr ausreicht, je eine Nachricht auf mehreren zu untersuchenden Nachrichtenpfaden abzusenden und anhand der Empfangsreihenfolge den schnellsten Nachrichtenpfad zu erkennen.

Gemäß einer vorteilhaften Fortbildung des Verfahrens können neben dem schnellsten Nachrichtenpfad auch die relativen Nachrichtenlaufzeiten ermittelt werden, d.h. die Verzögerungen, die jeder einzelne Nachrichtenpfad gegenüber dem schnellsten Nachrichtenpfad verursacht - Anspruch 2. Dies ist beispielsweise für Lastteilung zwischen zwei oder mehr Nachrichtenpfaden anwendbar, falls die Laufzeiten der Nachrichtenpfade nur unwesentlich voneinander abweichen, d.h. die ermittelten relativen Laufzeiten dieser Nachrichtenpfade bezogen auf den schnellsten Nachrichtenpfad sind hinreichend klein.

Vorteilhaft werden die Nachrichten, die zur Bestimmung des schnellsten Nachrichtenpfades bzw. zur Messung der relativen Laufzeiten vom Sender abgesendet werden, zeitgleich oder mit geringem zeitlichen Abstand abgesendet - Anspruch 4. Falls das verwendete Kommunikationsprotokoll und/oder die Sendeeinrichtung das gleichzeitige Absenden von Nachrichten auf mehreren Nachrichtenpfaden nicht vorsehen, kann ein geringer zeitlicher Abstand dieser Nachrichten vorgesehen werden.

Im folgenden wird das erfindungsgemäße Verfahren anhand von zwei Zeichnung näher erläutert.

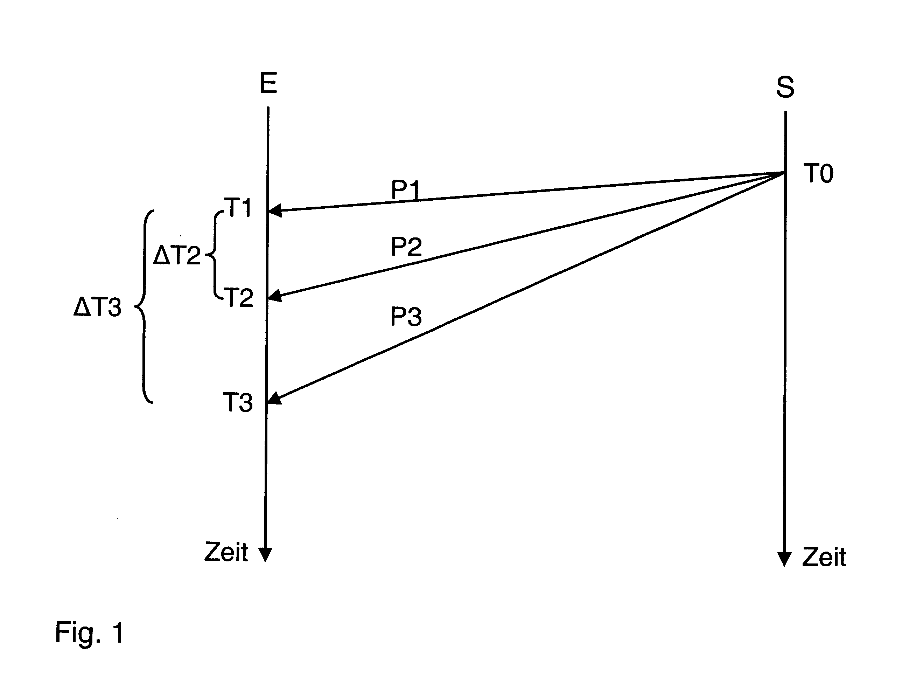

Fig. 1 zeigt eine Empfangseinrichtung E und eine Sendeeinrichtung S sowie drei über drei verschiedene Nachrichtenpfade P1, P2, P3 zwischen Empfangseinrichtung E und Sendeeinrichtung S von der Sendeeinrichtung S zur Empfangseinrichtung E zum Zeitpunkt T0 gesendete Nachrichten, die zu verschiedenen Zeiten T1, T2, T3 durch die Empfangseinrichtung E empfangen werden. Außerdem sind die relativen Nachrichtenlaufzeiten ΔT2, ΔT3 der Nachrichtenpfade P2, P3 bezogen auf den schnellsten Nachrichtenpfad P1 dargestellt.

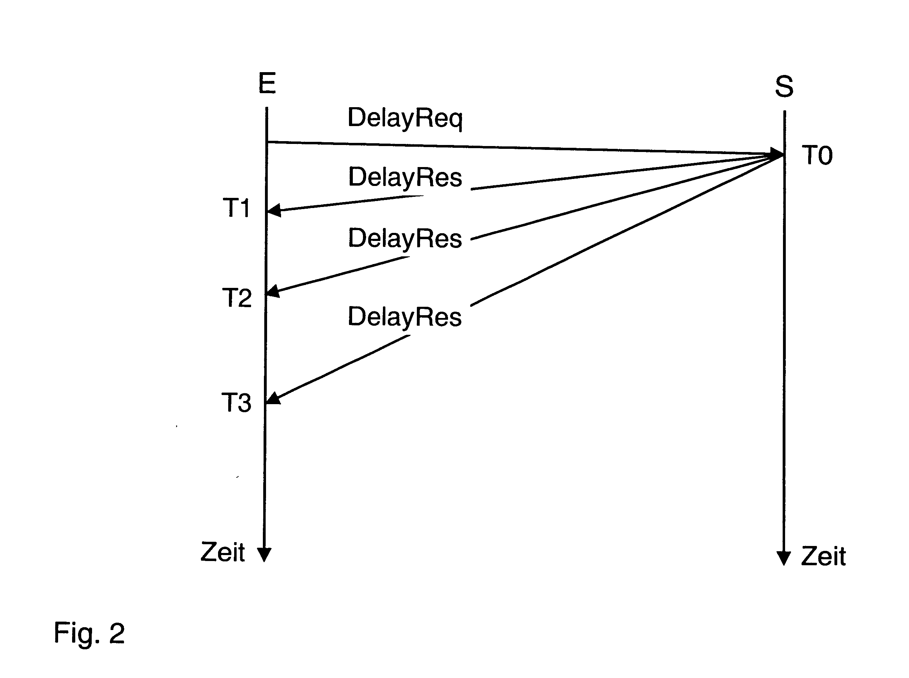

Fig. 2 zeigt die Empfangseinrichtung E und die Sendeeinrichtung S sowie eine von der Empfangseinrichtung E an die Sendeeinrichtung S gesendete Anforderungsnachricht DelayReq und drei identische zum Zeitpunkt T0 von der Sendeeinrichtung S daraufhin an die Empfangseinrichtung E auf den drei verschiedenen Nachrichtenfaden P1, P2, P3 gesendete Bestätigungsnachrichten DelayRes, die zu verschiedenen Zeiten T1, T2, T3 durch die Empfangseinrichtung E empfangen werden.

Fig. 1 illustriert die dem erfindungsgemäßen Verfahren zugrundeliegende Idee. Es soll festgestellt werden, welcher von mehreren zur Verfügung stehenden Nachrichtenpfaden P1, P2, P3 zwischen der Sendeeinrichtung S und der Empfangseinrichtung E der schnellste ist. Die Sendeeinrichtung S sendet auf mehreren Nachrichtenpfaden P1, P2, P3 eine Nachricht an die Empfangseinrichtung E. Anhand der Empfangsreihenfolge kann der schnellste Nachrichtenpfad P1 durch die Empfangseinrichtung E bestimmt werden. Dabei ist der absolute Empfangszeitpunkt T1 und die absolute Verzögerungszeit zwischen Sendeeinrichtung S und Empfangseinrichtung E, ausgedrückt durch die Formel T1-T0, ohne Bedeutung. Wichtig ist lediglich, daß über den ersten Nachrichtenpfad P1 die erste der identischen und zeitgleich oder mit vernachlässigbaren zeitlichen Abständen ausgesandten Nachrichten empfangen wurde. Damit ist der erste Nachrichtenpfad P1 als der schnellste Nachrichtenpfad bestimmt.

Durch die Zeitdifferenzen zwischen dem Empfang der identischen Nachrichten über die verschiedenen Nachrichtenpfade P1, P2, P3 können darüberhinaus die relativen Laufzeitdifferenzen ΔT2, ΔT3 ermittelt werden, d.h. die Verzögerungszeiten, die auf allen Nachrichtenpfaden P2, P3 gegenüber dem schnellsten Nachrichtenpfad P1 auftreten. Als Formel ausgedrückt ergibt sich als relative Laufzeitdifferenz ΔT2 für den Nachrichtenpfad P2: ΔT2=T2-T1. Für den Nachrichtenpfad P3 ergibt sich die relative Laufzeitdifferenz ΔT3 gemäß folgender Formel: ΔT3=T3-T1. Die relative Laufzeit ΔT1 des schnellsten Nachrichtenpfades P1 stellt einen Sonderfall dar. Je nach Anwendungsfall kann es sinnvoll sein, die relative Laufzeit ΔT1 des schnellsten Nachrichtenpfades P1 auf Null zu setzen: ΔT1=0 - nicht dargestellt. Falls eine Übermittlung der relativen Nachrichtenlaufzeiten ΔT1, ΔT2, ΔT3 an die Sendeeinrichtung S erfolgt, ist so sichergestellt, daß die Sendeeinrichtung S den schnellsten Nachrichtenpfad P1 erkennt, ohne daß dies gesondert signalisiert werden muß.

Zur Bestimmung des schnellsten Nachrichtenpfades P1 bzw. der relativen Nachrichtenlaufzeiten muß die Empfangseinrichtung E lediglich in der Lage sein zu erkennen, daß die Nachrichten zur gleichen Zeit gesendet wurden. Dies kann z.B. durch einen Zeitstempel in den Nachrichten, einem bestimmten Nachrichtentyp mit Sequenznummern oder einfach aus dem Protokoll selbst abgeleitet werden.

Nach Bestimmung des schnellsten Nachrichtenpfades durch die Empfangseinrichtung E muß nur noch der Sendeeinrichtung signalisiert werden, welcher Nachrichtenpfad der schnellste ist und fortan für die Übertragung von Nachrichten von der Sendeeinrichtung S zur Empfangseinrichtung E verwendet werden soll.

Ist die Kommunikationsbeziehung bidirektional, so wird das beschriebene Verfahren unabhängig in beiden Richtungen benutzt - nicht dargestellt.

Anstelle kompletter Nachrichten können auch in gewöhnliche Nachrichten eingebettete Nachrichtenelemente, Notifikationen oder Parameter verwendet werden, um das erfindungsgemäße Verfahren auszuführen. Statt einer eigenen Anforderungsnachricht DelayReq wird dann ein Anforderungs-Nachrichtenelement DelayReq verwendet. Als Antwort darauf können entweder die bereits genannten Bestätigungsnachrichten DelayRes gesendet werden, oder es wird ein anderer Nachrichtentyp verwendet, in den ein entsprechendes Bestätigungs-Nachrichtenelement DelayRes eingebettet ist.

Das erfindungsgemäße Verfahren kann mit dem Stream Control Transmission Protocol SCTP gemäß IETF RFC 2960 vorteilhaft angewendet werden. Dies ist schematisch in Fig. 2 dargestellt. SCTP ist ein Multilink-Protokoll. Wie bei SCTP üblich, wird im folgenden davon ausgegangen, daß ein Nachrichtenpfad zur Gegenseite durch eine Internet Protocol Adresse (im folgenden IP Adresse) der Gegenseite identifiziert wird. Ferner wird angenommen, daß ein Teil der Erweiterungen, die im IETF Internet Draft draft-ietf-tsvwg-addip-sctp-02 beschrieben sind, implementiert ist. Mit diesem Teil kann ein SCTP Endpunkt E den Primary Path bzw. primären Nachrichtenpfad eines Kommunikationspartners S setzen, daß heißt E kann bestimmen, auf welchem Pfad der Kommunikationspartner S Nachrichten zum Endpunkt E schickt. Diese Erweiterung wird zur Signalisierung, welcher Nachrichtenpfad der schnellste ist, benutzt.

Eine SCTP Nachricht besteht aus einem Common Header und einer Anzahl von Chunks. Diese Anzahl von Chunks kann bei verschiedenen SCTP Nachrichten unterschiedlich sein, auch ist es zulässig, Nachrichten ohne Chunks zu verwenden. Jeder Chunk wird durch einen Chunk Typ - eine Zahl zwischen 0 und 255 - klassifiziert. Das hier beschriebene Verfahren benutzt spezielle neue Chunk Typen (DelayReq(SN), DelayRes(SN)) mit einer Sequenznummer SN. SCTP erlaubt solche Erweiterungen. Dabei ist es möglich, die Interoperabilität mit SCTP Endpunkten zu bewahren, für welche diese neuen Chunks nicht implementiert sind. Die Empfangseinrichtung E sendet eine Anforderungsnachricht DelayReq(SN) aus, um eine Messung zu initiieren. Bei der nächsten Messung wird als Sequenznummer SN+1 benutzt, d.h. durch die Empfangseinrichtung E wird ein zusätzlicher Zähler geführt. Wird eine Anforderungsnachricht DelayReq(SN) durch die Sendeeinrichtung S empfangen, so wird auf einigen oder allen zur Verfügung stehenden Nachrichtenpfaden P1, P2, P3 je eine Bestätigungsnachricht DelayRes(SN) gesendet. Die Empfangseinrichtung E kann dann feststellen, welcher Nachrichtenpfad P1, P2, P3 der schnellste ist. Der schnellste Nachrichtenpfad P1 wird durch die Destination IP Adresse bzw. Ziel-IP Adresse der Bestätigungsnachricht gegeben, die den DelayRes(SN) Chunk enthält und als erstes empfangen wird. Diese IP-Adresse wird nun mit der Nachricht "Set Primary IP Address" (Setzen der primären IP Adresse, beschrieben in 3.2.5 und 4.4 des genannten IETF Internet Drafts draft-ietf-tsvwg-addip-sctp-02, untenstehend in Auszügen wiedergegeben) an die Sendeeinrichtung S signalisiert, die daraufhin diesen Nachrichtenpfad P1 stets als den ersten für Datenübertragung nutzen wird. Die Häufigkeit dieser Messungen hängt von der Stabilität des Netzes ab. Es bietet sich aber zum Beispiel an, periodisch solche Messungen vorzunehmen.

Alternativ zum oben beschriebenen Verfahren mit DelayReq und DelayRes Chunks können auch die Heartbeat und Heartbeat-Ack Chunks benutzt werden, um die Ermittlung des schnellsten Nachrichtenpfades P1, P2, P3 durchzuführen. Als Reaktion auf den Empfang eines Heartbeat Chunks werden dann auf einigen oder allen Nachrichtenpfaden Heartbeat-Ack Chunks gesendet, anstelle der DelayRes Chunks in obigem Ausführungsbeispiel. Auch dieses Verfahren gewährleistet die Interoperabilität mit anderen Implementierungen. Vorteilhaft kann zudem auf die Einführung neuer Chunk Typen verzichtet werden, allerdings muß das Verhalten des Protokolls entsprechend angepaßt werden.

Auszug aus IETF Internet Draft draft-ietf-tsvwg-addip-sctp-02

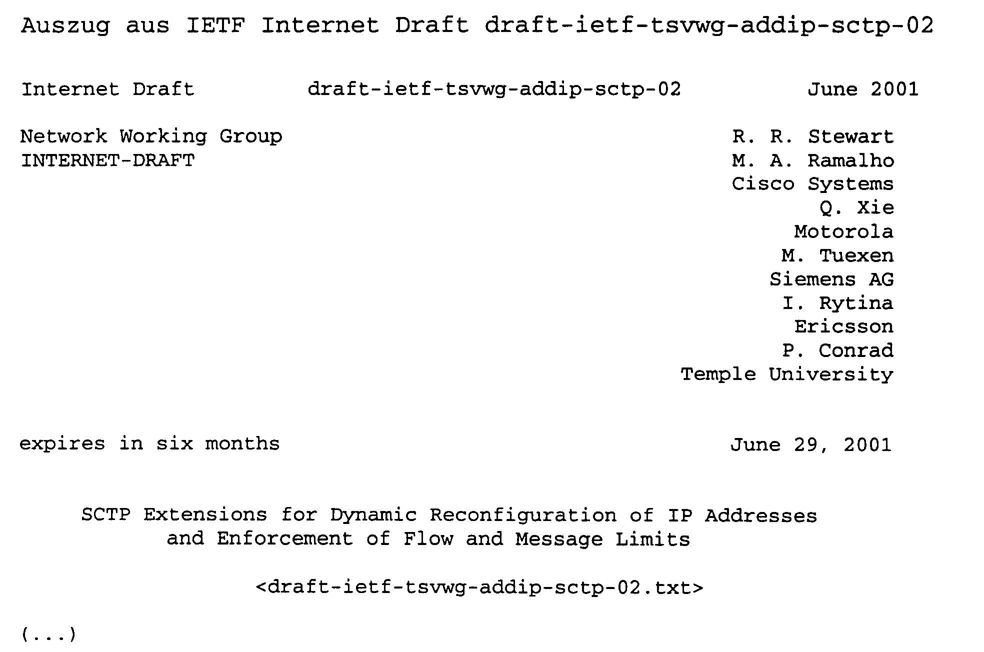

### 3.2.5 Set Primary IP Address

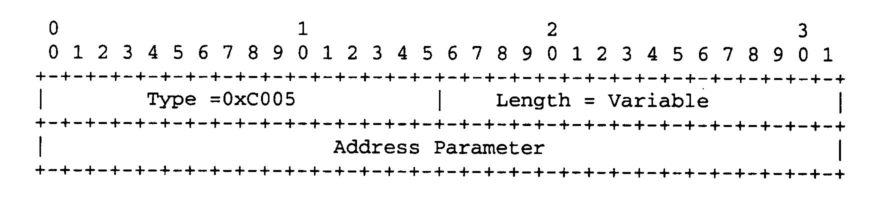

### Address Parameter: TLV

This field contains an IPv4 or IPv6 address parameter as described in 3.3.2.1 of [RFC2960]. The complete TLV is wrapped within this parameter. It requests the receiver to mark the specified address as the primary address to send data to (see section 5.1.2 of [RFC2960]). The receiver MAY mark this as its primary upon receiving this request.

An example TLV requesting that the IPv4 address 10.1.1.1 be made the primary destination address would look as follows:

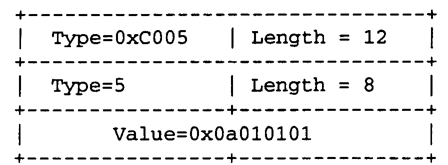

### Valid Chunk Appearance

The Set Primary IP Address parameter may appear in the ASCONF Chunk, the INIT, or the INIT-ACK chunk type. The inclusion of this parameter in the INIT or INIT-ACK can be used to indicate an initial preference of primary address.
(...)

### 4.4 Setting of the primary address

A sender of this option may elect to send this combined with a deletion or addition of an address. A sender SHOULD only send a set primary request to an address that is already considered part of the association. In other words if a sender combines a set primary with an add of a new IP address the set primary will be discarded unless the add request is to be processed BEFORE the set primary (i.e. it precedes the set primary).

A request to set primary MAY also appear in a INIT or INIT-ACK chunk. This can give advice to the peer endpoint as to which of its addresses the sender of the INIT or INIT-ACK would like to be used as the primary address.

The request to set an address as the primary path is an option the receiver SHOULD perform. It is considered advice to the receiver of the best destination address to use in sending SCTP packets (in the requester's view). If a request arrives that asks the receiver to set an address as primary that does not exist, the receiver should NOT honor the request, leaving its existing primary address unchanged.

## Patentansprüche

1. Verfahren zur Bestimmung des schnellsten Nachrichtenpfades (P1) in einem Kommunikationssystem mit einer Sendeeinrichtung (S), einer Empfangseinrichtung (E) und mindestens zwei Nachrichtenpfaden (P1, P2, P3) von der Sendeeinrichtung (S) zur Empfangseinrichtung (E), demgemäß durch die Sendeeinrichtung (S) Nachrichten bzw. Nachrichtenelemente (DelayRes) auf allen Nachrichtenpfaden (P1, P2, P3) von der Sendeeinrichtung (S) zur Empfangseinrichtung (E) abgesendet werden und der schnellste Nachrichtenpfad (P1) als der Nachrichtenpfad (P1, P2, P3) bestimmt wird, über den die zuerst durch die Empfangseinrichtung (E) empfangene Nachricht bzw. Nachrichtenelement (DelayRes) empfangen wird.

2. Verfahren nach Anspruch 1,
**dadurch gekennzeichnet,**
**daß** alle durch die Sendeeinrichtung (S) gesendeten Nachrichten bzw. Nachrichtenelemente (DelayRes) auf den Nachrichtenpfaden (P1, P2, P3) von der Sendeeinrichtung (S) zur Empfangseinrichtung (E) durch die Empfangseinrichtung (E) empfangen werden und relative Nachrichtenlaufzeiten (ΔT2, ΔT3) für alle oder ausgewählte Nachrichtenpfade (P1, P2, P3) aus den zeitlichen Abständen der auf den verschiedenen Nachrichtenpfaden (P1, P2, P3) empfangenen Nachrichten bzw. Nachrichtenelemente (DelayRes) bezogen auf die Nachrichtenlaufzeit des schnellsten Nachrichtenpfades (P1) ermittelt werden.

3. Verfahren nach einem der Ansprüche 1 oder 2,
**dadurch gekennzeichnet,**
**daß** der ermittelte schnellste Nachrichtenpfad (P1) und/oder die relativen Nachrichtenlaufzeiten (ΔT2, ΔT3) aller oder ausgewählter Nachrichtenpfade (P1, P2, P3) durch die Empfangseinrichtung (E) an die Sendeeinrichtung (S) signalisiert werden.

4. Verfahren nach einem der Ansprüche 1 bis 3,
**dadurch gekennzeichnet,**
**daß** die Nachrichten bzw. Nachrichtenelemente (DelayRes) durch die Sendeeinrichtung (S) auf den verschiedenen Nachrichtenpfaden (P1, P2, P3) von der Sendeeinrichtung (S) zur Empfangseinrichtung (E) zeitgleich oder mit geringen, gegenüber der zu erwartenden Laufzeit vernachlässigbaren zeitlichen Abständen gesendet werden.

5. Verfahren nach einem der Ansprüche 1 bis 4,
**dadurch gekennzeichnet,**
**daß** auf den verschiedenen Nachrichtenpfaden (P1, P2, P3) von der Sendeeinrichtung (S) zur Empfangseinrichtung (E) Nachrichten bzw. Nachrichtenelemente (DelayRes) gleicher Länge und/oder Nachrichten (DelayRes) mit gleichen Merkmalen durch die Sendeeinrichtung (S) gesendet werden.

6. Verfahren nach einem der Ansprüche 1 bis 5,
**dadurch gekennzeichnet,**
**daß** die auf den verschiedenen Nachrichtenpfaden (P1, P2, P3) von der Sendeeinrichtung (S) zur Empfangseinrichtung (E) gesendeten Nachrichten bzw. Nachrichtenelemente (DelayRes)
- anhand eines durch die Sendeeinrichtung (S) aufgeprägten Zeitstempels und/oder
- anhand eines speziellen, im zwischen Sendeeinrichtung (S) und Empfangseinrichtung (E) vereinbarten Kommunikationsprotokoll dafür vorgesehenen Nachrichtentyps und/oder anhand einer von der Sendeeinrichtung (S) eingestellten Sequenznummer der Nachrichten bzw. Nachrichtenelemente und/oder
- anhand der Merkmale des zwischen Sendeeinrichtung (S) und Empfangseinrichtung (E) vereinbarten Kommunikationsprotokolls als die für die Ermittlung des schnellsten Nachrichtenpfades (P1) und/oder der relativen Nachrichtenlaufzeiten (ΔT2, ΔT3) aller oder ausgewählter Nachrichtenpfade (P1, P2, P3) vorgesehenen Nachrichten bzw. Nachrichtenelemente (DelayRes) erkannt werden.

7. Verfahren nach einem der Ansprüche 1 bis 6,
**dadurch gekennzeichnet,**
**daß** als Kommunikationsprotokoll zwischen Sendeeinrichtung (S) und Empfangseinrichtung (E) ein Multilink-Protokoll eingesetzt wird, bei dem durch die Empfangseinrichtung (E) an die Sendeeinrichtung (S) ein primärer Nachrichtenpfad (P1) von verschiedenen Nachrichtenpfaden (P1, P2, P3) signalisiert werden kann, der dann von der Sendeeinrichtung (S) für die Übermittlung von Nachrichten an die Empfangseinrichtung (E) verwendet wird.

8. Verfahren nach einem der Ansprüche 1 bis 7,
**dadurch gekennzeichnet,**
**daß** als Kommunikationsprotokoll zwischen Sendeeinrichtung (S) und Empfangseinrichtung (E) das Stream Control Transmission Protocol SCTP gemäß IETF RFC 2960 mit einer Erweiterung, durch welche die Empfangseinrichtung (E) an die Sendeeinrichtung (S) einen für die Übermittlung von Nachrichten an die Empfangseinrichtung (E) zu verwendenden primären Nachrichtenpfad (P1) signalisieren kann, eingesetzt wird.

9. Empfangseinrichtung (E), die Nachrichten von einer Sendeeinrichtung (S) empfängt, über mindestens zwei Nachrichtenpfade (P1, P2, P3) mit der Sendeeinrichtung (S) gekoppelt ist und Mittel zur Bestimmung des schnellsten Nachrichtenpfades (P1) von der Sendeeinrichtung (S) zur Empfangseinrichtung (E) umfaßt, durch welche die Empfangseinrichtung (E) von der Sendeeinrichtung (S) auf allen Nachrichtenpfaden (P1, P2, P3) von der Sendeeinrichtung (S) zur Empfangseinrichtung (E) gesendete Nachrichten bzw. Nachrichtenelemente (DelayRes) empfängt und den schnellsten Nachrichtenpfad (P1) als den Nachrichtenpfad (P1, P2, P3) bestimmt, über den die Empfangseinrichtung (E) zuerst eine Nachricht (DelayRes) empfängt.

10. Empfangseinrichtung (E) nach Anspruch 9,
**dadurch gekennzeichnet,**
**daß** die Empfangseinrichtung (E) Mittel zur Bestimmung relativer Nachrichtenlaufzeiten (ΔT2, ΔT3) für alle oder ausgewählte Nachrichtenpfade (P1, P2, P3) aus den zeitlichen Abständen der von der Sendeeinrichtung (S) auf allen Nachrichtenpfaden (P1, P2, P3) empfangenen Nachrichten bzw. Nachrichtenelemente (DelayRes) umfaßt, wobei die relativen Nachrichtenlaufzeiten (ΔT2, ΔT3) auf die Nachrichtenlaufzeit des schnellsten Nachrichtenpfades (P1) bezogen sind.

11. Empfangseinrichtung (E) nach einem der Ansprüche 9 oder 10,
**dadurch gekennzeichnet,**
**daß** die Empfangseinrichtung (E) Mittel zur Signalisierung des schnellsten Nachrichtenpfades (P1) und/oder der relativen Nachrichtenlaufzeiten (ΔT2, ΔT3) an die Sendeeinrichtung (S) umfaßt.

12. Empfangseinrichtung (E) nach einem der Ansprüche 9 bis 11,
**dadurch gekennzeichnet,**
**daß** die Empfangseinrichtung (E) Mittel für die Identifizierung der für die Ermittlung des schnellsten Nachrichtenpfades (P1) und/oder der relativen Nachrichtenlaufzeiten (ΔT2, ΔT3) aller oder ausgewählter Nachrichtenpfade (P1, P2, P3) vorgesehenen Nachrichten bzw. Nachrichtenelemente (DelayRes)
- anhand eines durch die Sendeeinrichtung (S) aufgeprägten Zeitstempels und/oder
- anhand eines speziellen, im zwischen Sendeeinrichtung (S) und Empfangseinrichtung (E) vereinbarten Kommunikationsprotokoll dafür vorgesehenen Nachrichtentyps und/oder anhand einer von der Sendeeinrichtung (S) eingestellten Sequenznummer der Nachrichten bzw. Nachrichtenelemente und/oder
- anhand der Merkmale des zwischen Sendeeinrichtung (S) und Empfangseinrichtung (E) vereinbarten Kommunikationsprotokolls
umfaßt.

13. Empfangseinrichtung (E) nach einem der Ansprüche 9 bis 12,
**dadurch gekennzeichnet,**
**daß** die Empfangseinrichtung (E) eine Protokolleinrichtung enthält, die den Empfängerteil eines Multilink-Protokolls bildet, wobei das Multilink-Protokoll Mittel zur Signalisierung eines primären Nachrichtenpfads (P1) von verschiedenen Nachrichtenpfaden (P1, P2, P3) durch die Empfangseinrichtung (E) an die Sendeeinrichtung (S) vorsieht, wobei der primäre Nachrichtenpfad (P1) dann von der Sendeeinrichtung (S) für die Übermittlung von Nachrichten an die Empfangseinrichtung (E) verwendet wird.

14. Empfangseinrichtung (E) nach einem der Ansprüche 9 bis 13,
**dadurch gekennzeichnet,**
**daß** die Empfangseinrichtung (E) eine Protokolleinrichtung enthält, die den Empfängerteil des Stream Control Transmission Protocol SCTP gemäß IETF RFC 2960 bildet, wobei das Stream Control Transmission Protocol SCTP eine Erweiterung aufweist, durch welche die Empfangseinrichtung (E) an die Sendeeinrichtung (S) einen für die Übermittlung von Nachrichten an die Empfangseinrichtung (E) zu verwendenden primären Nachrichtenpfad (P1) signalisieren kann.

15. Sendeeinrichtung (S), die Nachrichten an eine Empfangseinrichtung (E) sendet, über mindestens zwei Nachrichtenpfade (P1, P2, P3) mit der Empfangseinrichtung (E) gekoppelt ist und
- Mittel zum zeitgleichen Senden von Nachrichten bzw. Nachrichtenelemente (DelayRes) über alle Nachrichtenpfade (P1, P2, P3) oder Mittel zum Senden von Nachrichten bzw. Nachrichtenelemente (DelayRes) über alle Nachrichtenpfade (P1, P2, P3) mit geringen, gegenüber der zu erwartenden Laufzeit vernachlässigbaren zeitlichen Abständen umfaßt und
- Mittel zum Kennzeichnen der Nachrichten bzw. Nachrichtenelemente (DelayRes) aufweist, so daß die Nachrichten bzw. Nachrichtenelemente durch die Empfangseinrichtung (E) als die für die Ermittlung des schnellsten Nachrichtenpfades (P1) und/oder relativer Nachrichtenlaufzeiten (ΔT2, ΔT3) aller oder ausgewählter Nachrichtenpfade (P1, P2, P3) vorgesehenen Nachrichten bzw. Nachrichtenelemente (DelayRes) erkannt werden.

16. Sendeeinrichtung (S) nach Anspruch 15,
**dadurch gekennzeichnet,**
**daß** die Sendeeinrichtung (S) Mittel zum Senden von Nachrichten bzw. Nachrichtenelemente (DelayRes) gleicher Länge und/oder Nachrichten bzw. Nachrichtenelemente (DelayRes) mit gleichen Merkmalen zur Ermittlung des schnellsten Nachrichtenpfades (P1) und/oder relativer Nachrichtenlaufzeiten (ΔT2, ΔT3) aller oder ausgewählter Nachrichtenpfade (P1, P2, P3) durch die Empfangseinrichtung (E) aufweist.

17. Sendeeinrichtung (S) nach einem der Ansprüche 15 oder 16,
**dadurch gekennzeichnet,**
**daß** die Mittel zum Kennzeichnen der Nachrichten bzw. Nachrichtenelemente (DelayRes) Mittel zum Aufprägen eines Zeitstempels und/oder Mittel zum Verwenden eines im zwischen Sendeeinrichtung (S) und Empfangseinrichtung (E) vereinbarten Kommunikationsprotokoll für die Ermittlung des schnellsten Nachrichtenpfades (P1) und/oder relativer Nachrichtenlaufzeiten (ΔT2, ΔT3) aller oder ausgewählter Nachrichtenpfade (P1, P2, P3) durch die Empfangseinrichtung (E) vorgesehenen Nachrichtentyps umfassen und/oder Merkmale des zwischen Sendeeinrichtung (S) und Empfangseinrichtung (E) vereinbarten Kommunikationsprotokolls umfassen.

18. Sendeeinrichtung (S) nach einem der Ansprüche 15 bis 17,
**dadurch gekennzeichnet,**
**daß** die Sendeeinrichtung (S) eine Protokolleinrichtung enthält, die den Sendeteil eines Multilink-Protokolls bildet, wobei das Multilink-Protokoll Mittel zur Signalisierung eines primären Nachrichtenpfads (P1) von verschiedenen Nachrichtenpfaden (P1, P2, P3) durch die Empfangseinrichtung (E) an die Sendeeinrichtung (S) vorsieht, wobei der primäre Nachrichtenpfad (P1) dann von der Sendeeinrichtung (S) für die Übermittlung von Nachrichten an die Empfangseinrichtung (E) verwendet wird.

19. Sendeeinrichtung (S) nach einem der Ansprüche 15 bis 18,
**dadurch gekennzeichnet,**
**daß** die Sendeeinrichtung (S) eine Protokolleinrichtung enthält, die den Sendeteil des Stream Control Transmission Protocol SCTP gemäß IETF RFC 2960 bildet, wobei das Stream Control Transmission Protocol SCTP eine Erweiterung aufweist, durch welche die Empfangseinrichtung (E) an die Sendeeinrichtung (S) einen für die Übermittlung von Nachrichten an die Empfangseinrichtung (E) zu verwendenden primären Nachrichtenpfad (P1) signalisieren kann.
